Europäisches Patentamt

European Patent Office

Office européen des brevets

(19)

(11) Publication number: **0 390 012**
**A1**

## (12) EUROPEAN PATENT APPLICATION

(21) Application number: **90105674.7**

(22) Date of filing: **26.03.90**

(51) Int. Cl.⁵: **B60C 1/00, C08L 21/00,**
**C08L 13/00, C08K 5/09**

(30) Priority: **30.03.89 US 330851**

(43) Date of publication of application:
**03.10.90 Bulletin 90/40**

(84) Designated Contracting States:
**BE DE ES FR GB IT NL**

(71) Applicant: **BRIDGESTONE/FIRESTONE, INC.**
**1200 Firestone Parkway**
**Akron, Ohio 44317(US)**

(72) Inventor: **Graves, Daniel F.**
**7176 Cleveland-Massillon Road**
**Clinton, Ohio 44216(US)**
Inventor: **Roland, Charles M.**
**324 Eutaw Forest Drive**
**Waldorf, Maryland 20601(US)**
Inventor: **Bohm, Georg G.A.**
**1212 Sunset View Drive**
**Akron, Ohio 44313(US)**

(74) Representative: **Kraus, Walter, Dr. et al**
**Patentanwälte Kraus, Weisert & Partner**
**Thomas-Wimmer-Ring 15**
**D-8000 München 22(DE)**

(54) **Tread stocks containing ionic and covalent crosslinks.**

(57) A tire tread comprising a crosslinked tread rubber containing a specific combination of ionic and covalent crosslinks is provided. The crosslinked tread rubber may advantageously contain from 20 to 50% of ionic crosslinks and from 80 to 50% of covalent crosslinks.

Tire treads of the invention which contain an appropriate combination of ionic and covalent crosslinks exhibit improved wear, lower rolling resistance, lower hysteresis and increased strength properties as compared to conventional tire treads which contain only covalent crosslinks.

EP 0 390 012 A1

## Tread Stocks Containing Ionic and Covalent Crosslinks

Background of The Invention

The invention relates to tire treads. More particularly, the invention relates to tire treads which comprise a crosslinked tread rubber containing a specific combination of ionic and covalent crosslinks.

Modern tires and particularly tire treads must meet a number of demanding requirements. Thus, tire treads must exhibit excellent wear properties, low rolling resistance, low hysteresis, good traction and good strength properties. However, it is difficult to achieve certain of these properties without sacrificing or diminishing some of the other properties. Thus, for example, lower rolling resistance is often accompanied by lower traction while increased traction is often accompanied by higher rolling resistance and hysteresis. Accordingly, those active in the tire compounding art generally strive for a balance of properties. The tire treads of the invention exhibit an excellent balance of overall properties while providing for improved wear, lower rolling resistance and lower hysteresis.

Cured or crosslinked rubber compositions containing ionic and covalent crosslinks are known in the prior art as illustrated by the following patents and publications.

U.S. 3,823,122 discloses a cured SBR composition formed from a curable SBR composition containing 5.0 parts of zinc methacrylate and 2.0 parts of sulfur (see test composition II).

U.S. 4,056,269 to Pollitt et al. relates to molding compositions suitable for forming molded golf balls containing cis-polybutadiene, a metal-containing crosslinking monomer and peroxide initiator. A wide variety of metal-containing crosslinking monomers are disclosed in columns 2 and 3 of the patent including zinc diacrylate, zinc dimethacrylate and magnesium dimethacrylate. The patent further discloses the curing of the molding compositions at temperatures ranging from 130 to 200° C for time periods of from 1 to 50 minutes.

U.S. 4,065,537 to Miller et al. relates to a process for producing molded golf balls exhibiting isometric compression which involves the use of cylindrical slugs about 2.5 to 3.3 inches long having substantially flat or convex top and bottom surfaces during the molding process. Molding compositions for forming such slugs are disclosed which contain cis-polybutadiene or other elastomers, a metal-containing crosslinking monomer and a peroxide initiator. A wide variety of metal-containing crosslinking monomers are disclosed including zinc dimethacrylate and magnesium dimethacrylate. The compositions disclosed are basically the same as those described in U.S. 4,056,269 above with the exception that the preferred amounts of metal-containing crosslinking monomer, especially when said monomer is zinc dimethacrylate, are stated as ranging from about 15 to 60 parts per 100 parts of cis-polybutadiene. Curing conditions disclosed are the same as set forth in the aforementioned patent.

U.S. 4,082,288 to Martin et al. discloses free-radical crosslinkable compositions containing a peroxide cross-linkable elastomer, from about 10 to about 60 parts by weight per 100 parts by weight of elastomer of basic zinc methacrylate and a peroxide curing agent. The examples of the patent indicate that the compositions are cured at 300° F (148.9° C) for 20 minutes. The patent indicates that the compositions are useful in the preparation of golf balls.

U.S. 4,165,877 to Miller et al. discloses molded golf balls formed from molding compositions comprising a cis-polybutadiene or other elastomer, a crosslinking monomer such as a metal acrylate or methacrylate and a peroxide initiator.

U.S. 4,191,671 to Kataoka et al. relates to abrasion resistant rubber compositions which are prepared by curing rubber compositions comprising: (A) a diene elastomer, (B) an alpha-beta ethylenically unsaturated carboxylic acid, wherein the ratio by weight of component (A) to component (B) is 87/13 to 55/45, (C) a divalent metal compound being present in quantities of 50 to 150 parts by weight per 100 parts by weight of component (B), and (D) an organic peroxide being present in quantities of 0.3 to 5.0 parts by weight per 100 parts by weight of the combined weight of components (A) and (B). The compositions may additionally contain an unpolymerizable carboxylic acid, carbon black in amounts of less than 50 parts by weight per 100 parts by weight of elastomer and an amine and/or phenol compound. The patent broadly discloses curing temperatures ranging from 110-180° C while the examples thereof exemplify curing temperatures ranging from 120° to 140° C and curing times ranging from 30 minutes to 60 minutes.

U.S. 4,264,075 to Miller et al., relates to a two-piece molded golf ball consisting of a cover comprising an ionic copolymer and a center part formed from a molding composition containing cis-polybutadiene or other elastomers, a metal-containing crosslinking monomer and a peroxide initiator. A wide variety of such crosslinking monomers are disclosed including zinc dimethacrylate and magnesium dimethacrylate. The molding compositions used to form the center part of the golf ball are substantially the same as those described in U.S. 4,056,269 and 4,065,537 above with the exception that lower quantities of crosslinking monomer are preferred, i.e. from 15 to 35 parts per 100 parts of cis-polybutadiene. Molding temperatures disclosed in the patent may range between 140°C and 200°C, advantageously about 150° to 190°C, preferably 170° to 185°C and curing times may range from about 50 to 1 minutes, advantageously from 30 to 5 minutes and preferably about 20 to 10 minutes.

U.S. 4,266,772 to Martin et al. relates to solid golf balls formed from a curable elastomer composition comprising a free radical crosslinkable elastomer, especially a peroxide crosslinkable elastomer; from about 10 to about 60 parts by weight of a zinc oxide-methacrylic acid reaction product, preferably basic zinc methacrylate, per 100 parts by weight of elastomer and a curing agent such as a peroxide curing agent. Curing conditions set forth in the examples are 20 minutes at 300°F (148.9°C).

U.S. 4,305,851 to Tominaga et al. relates to a process for preparing a solid golf ball which comprises incorporating a microencapsulated zinc salt of an allyl group containing carboxylic acid as a crosslinking agent into a rubber along with a peroxide curing agent and other additives to produce a rubber composition, following which the rubber composition is molded. The patent at column 5, Table I discloses several polybutadiene rubber compounds containing microencapsulated zinc dimethacrylate and peroxide curing agents with the zinc dimethacrylate being present in amounts of 42 and 50 parts respectively. The compositions are cured for 30 minutes at 150°C.

U.S. 4,500,466 to Hayes et al. discloses crosslinked polymeric compositions formed from vulcanizable polymeric compositions comprising rubbery polymers, zinc dimethacrylate having a surface area of from about 3.7 to about 5.4 m2/g or more and a peroxide curing agent.

U.S. 4,529,770 to Hayes et al. discloses crosslinked polymeric compositions formed from vulcanizable polymeric compositions comprising natural rubber or copolymers of conjugated dienes and monoolefins, from about 2.5 to about 20 parts by weight of zinc dimethacrylate having a surface area of from about 3.7 to about 5.4 m2/g or more, a peroxide curing agent and from about 30 to about 70 parts by weight of a filler selected from the group consisting of carbon black, clay, silica, mixtures of carbon black and clay and mixtures of clay and silica.

British patent 1,091,818 discloses crosslinked polymeric compositions which are formed from vulcanizable mixtures comprising a polymer of at least one alpha olefin, an organic peroxide and a metal salt of acrylic acid or methacrylic acid.

British patent 2,042,553 discloses crosslinked cellular elastomeric compositions which are formed from an elastomer composition comprising a natural and/or synthetic rubber, a crosslinking agent such as a peroxide, a monomer's metallic salt such as zinc dimethacrylate, zinc diacrylate or basic zinc methacrylate and a blowing agent.

The article entitled: "Vulcanization of Rubbers By Salts of Unsaturated Acids. Vulcanization of Butadiene-Styrene Rubber By Methacrylate Salts." by A. A. Dontsov et al. appearing in the Colloid Journal USSR, Volume 31, pages 293-297 (1969) discloses crosslinked compositions formed from vulcanizable composition comprising butadiene-styrene rubber or ethylene-propylene rubber, magnesium methacrylate or sodium methacrylate and dicumyl peroxide.

The article entitled: "Elastic Properties and Structure of Polybutadiene Vulcanized with Magnesium Methacrylate" by A. A. Dontsov et al. appearing in the Journal of Applied Polymer Science, Volume 16, pages 505-518 (1972) discloses crosslinked polymer compositions formed from vulcanizable compositions comprising polybutadiene, magnesium methacrylate and dicumyl peroxide.

The Article entitled: "General Regularities of Heterogeneous Vulcanization" by A. A. Dontsov appearing in the publication Rubbercon '77, International Rubber Conference, Volume 2, pages 26-1 through 26-12 (1977) discloses crosslinked polymer compositions formed from vulcanizable compositions comprising styrene-butadiene rubber or ethylene-propylene rubber; magnesium, sodium, zinc and cadmium salts of methacrylic, maleic and betaphenyl acrylic acids and radical type initiators such as dicumyl peroxide.

A crosslinked tread rubber containing ionic and covalent crosslinks has also been disclosed in the prior art. Thus, the article entitled: "Carboxylated Butadiene-Styrene Copolymer and its Use in Tire Treads," by G. N. Buiko et al appearing in Volume 20 of the publication Soviet Rubber Technology (1961) at pages 8-14 discloses a crosslinked tread rubber formed by vulcanizing a tread rubber compound containing 100 parts by weight of a carboxylated butadiene-styrene (70:30) copolymer, 45 parts by weight of HAF black, 2.0 parts by weight of MgO, 1.0 parts by weight of ZnO and 1.0 parts by weight of TMTD (tetramethylthiuram disulfide). The reference indicates that the reason for including TMTD in the formulation is "to raise heat stability." The concentrations of ionic and covalent crosslinks in the tread rubber are not specified. However, in view of the fact that the amount of MgO and ZnO neutralizing agents in the formulation are 2.0 and 1.0 parts respectively and assuming complete neutralization of the carboxyl groups, this would correspond to 0.062 moles of ionic crosslinks per 100 parts of rubber. The concentration of TMTD on the other hand is only 0.004 moles per 100 parts of rubber. This suggests that the crosslinked tread rubber contains a fifteen-fold excess of ionic crosslinks over covalent crosslinks. It must therefore be inferred that the tread stocks of this reference are essentially ionically crosslinked tread rubbers containing a very low level of covalent crosslinks.

Summary of the Invention

In accordance with the present invention, a tire tread having an excellent balance of properties including improved wear, lower rolling resistance, lower hysteresis and increased strength properties is obtained. The tire tread comprises a crosslinked tread rubber containing a specific combination of ionic and covalent crosslinks. Thus, the crosslinked tread rubber may contain from 20 to 50% of ionic crosslinks and from 80 to 50% of covalent crosslinks. Particularly useful tire treads are those in which the crosslinked tread rubber contains from 20 to 40% of ionic crosslinks and from 80 to 60% of covalent crosslinks.

Tread rubbers containing both ionic and covalent crosslinks may be prepared by various methods. Thus, for example, the crosslinked tread rubber can be prepared by vulcanizing a tread rubber which does not contain acid groups (e.g. natural rubber, SBR, etc.) using a mixture of a metal dimethacrylate which imparts ionic crosslinks and a peroxide or sulfur crosslinking agent which imparts covalent crosslinks. Alternatively, the crosslinked tread rubber can be prepared by neutralizing an acid group - containing rubber with an appropriate neutralizing agent such as an inorganic metal compound to impart ionic crosslinks and then vulcanizing the resultant ionic group-containing rubber with a peroxide or sulfur crosslinking agent to impart covalent crosslinks. It is also possible to introduce covalent crosslinks into the tread rubber using ionizing radiation. Particular methods of preparing tread rubbers containing ionic and covalent crosslinks do not form part of the invention and will not be discussed in detail herein.

Detailed Description of the Invention

The term "rubber" as used throughout the specification and claims is employed in the broad sense of the term and includes rubber, rubbery polymers and elastomers. The term "neutralized" as used throughout the specification and claims is intended to cover either complete or partial neutralization of acid groups.

As indicated, the tire treads of the invention comprise a crosslinked tread rubber containing a specific combination of ionic and covalent crosslinks. The crosslinked tread rubber may broadly contain from 20 to 50% of ionic crosslinks and correspondingly from 80 to 50% of covalent crosslinks. However, the preferred tire treads are those in which the crosslinked tread rubber contains from 20 to 40% of ionic crosslinks and from 80 to 60% of covalent crosslinks.

Various rubbers may be utilized in preparing the crosslinked tread rubber of the tire treads of the invention including any of those heretofore used as tread rubbers for tires. Thus, tread rubbers which may be employed herein include natural rubber, styrene-butadiene rubber (SBR), polybutadiene rubber, EPDM rubber, nitrile rubber and the like; acid group-containing rubbers or polymers including carboxylated rubbers such as carboxylated SBR, carboxylated polybutadiene, carboxylated nitrile and the like, sulfonated rubbers such as sulfonated SBR, sulfonated EPDM and the like; and neutralized or partially neutralized acid group containing rubbers such as neutralized carboxylated SBR, neutralized carboxylated polybutadiene, neutralized carboxylated nitrile, neutralized sulfonated SBR, neutralized sulfonated EPDM and the like as well as blends of such rubbers. The preferred tread rubbers are SBR, carboxylated SBR, carboxylated nitrile and neutralized sulfonated EPDM. It should be understood that the foregoing list of tread rubbers is not meant to be exclusive of those which may be utilized but illustrative only since other suitable tread rubbers will be evident to those skilled in the rubber compounding art.

It should be noted here that the term "EPDM" as referred to above and hereafter is used in the sense of its definition as found in ASTM-D-1418-64 and is intended to mean a terpolymer of ethylene, propylene and a diene monomer. Illustrative methods for preparing such terpolymers are found in U.S. Patent No. 3,280,082 and British Patent No. 1,030,289, the disclosures of which are incorporated herein by reference. The preferred terpolymers contain from about 40 to about 80 weight percent ethylene and from about 1 to about 10 weight percent of the diene with the balance of the terpolymer being propylene. The diene monomer utilized in forming the terpolymer is preferably a non-conjugated diene such as dicyclopentadiene, 1,4-hexadiene, 1,5-hexadiene, 5-ethylidene-2-norbornene and the like.

Acid group-containing rubbers such as the carboxylated or sulfonated rubbers mentioned above and

EP 0 390 012 A1

methods for their preparation are well known in the polymer art. Thus, for example, a carboxylated styrene-butadiene elastomer or a carboxylated nitrile elastomer can be prepared by copolymerizing butadiene and styrene or butadiene and acrylonitrile with an unsaturated acid such as methacrylic acid in an acid medium. Alternatively, the carboxylated elastomer may be prepared by copolymerizing butadiene and styrene or butadiene and acrylonitrile with an acrylate or methacrylate ester such as an alkyl acrylate or alkyl methacrylate and then hydrolyzing the acrylate or methacrylate ester to the acid by heating in alkaline solution. Additionally, the carboxylated styrene-butadiene or nitrile elastomer can be prepared by a solution metallation process such as that described in U.S. Patent 3,598,793, the disclosure of which is incorporated herein by reference, in which the elastomer is metallated with an alkyl lithium compound such as butyl lithium in the presence of a chelating amine, preferably a tertiary diamine such as tetramethylethylenediamine (TMEDA), followed by treatment with carbon dioxide to form the lithium salt of the carboxylated elastomer and then termination with methanol to convert the lithium salt to the free carboxylated elastomer.

Sulfonated elastomers such as sulfonated SBR or sulfonated EPDM can be prepared by sulfonating the elastomer using a sulfonating agent selected from a complex of a sulfur trioxide donor and a Lewis base, acetyl sulfate, propionyl sulfate and butyryl sulfate using the procedure described in U.S. patents 3,642,728 and 3,836,511, the disclosures of which are incorporated herein by reference.

As indicated heretofore, when an acid group-containing tread rubber is employed, it is necessary to neutralize the acid groups in order to introduce ionic crosslinks into the tread rubber. Neutralization of the acid groups can be affected either prior to vulcanization with the covalent crosslinking agent or in-situ during the vulcanization process by including an appropriate basic compound such as an inorganic metal salt in the tread rubber compound containing the acid-group containing rubber and covalent crosslinking agent.

Any of the inorganic metal salts heretofore used to neutralize acid group-containing polymers may be utilized for that purpose. Thus, inorganic metal salts which may be employed as neutralizing agents include those in which the metal ion is a metal of Groups I, II, III, IV, V, VI-B, VII-B and VIII of the Periodic Table of the Elements. The preferred inorganic metal salts are metal oxides and of these, zinc oxide, magnesium oxide and mixtures thereof are especially preferred. In instances where neutralization is to be affected in-situ, the inorganic metal salt may be present in the tread rubber compound in amounts ranging from about 1 to about 20 parts by weight per 100 parts by weight of acid group-containing tread rubber with generally preferred amounts ranging from 2 to 10 parts by weight.

The preferred neutralized sulfonated EPDM elastomers are zinc neutralized sulfonated EPDM elastomers such as those described in U.S. Patents 4,137,203 and 4,222,914, the disclosures of which are incorporated herein by reference. A particularly preferred zinc neutralized EPDM elastomer is a zinc sulfonated EPDM having a base EPDM molecular weight, Mn, of 50,000 an average number of $SO_3-$ groups per molecule of 13, 2.7% by weight of ionic groups, a bulk density of 8-10 lbs/cu. ft., a Tg of -60° C and 25 milliequivalents (meq) of zinc sulfonate groups per 100 grams of terpolymer available under the designation IE2590 from Uniroyal Chemical Company, Inc.

As indicated above, ionic and covalent crosslinks can be introduced into tread rubbers which do not contain acid groups such as natural rubbers, SBR, polybutadiene rubber, EPDM rubber and nitrile rubber, by vulcanizing such rubbers using a mixture of a metal dimethacrylate which imparts ionic crosslinks and a peroxide or sulfur crosslinking agent which imparts covalent crosslinks.

Metal dimethacrylates which may be employed include magnesium dimethacrylate and zinc dimethacrylate. Specific amounts of metal dimethacrylate which may be utilized are dependent on a number of factors including the particular tread rubber selected, the level of ionic crosslinks desired, vulcanizing or curing conditions and the like. In general, the metal dimethacrylate may be employed in amounts ranging from about 5 to about 40 parts by weight per 100 parts by weight of tread rubber with preferred amounts ranging from 10 to 30 parts by weight.

Peroxide crosslinking agents which may be employed to introduce covalent crosslinks into the tread rubber include organic peroxides such as dicumyl peroxide, bis-(t-butyl peroxy) diisopropyl benzene, t-butyl perbenzoate, di-t-butyl peroxide, 2,5-dimethyl-2,5-di-t-butyl peroxy-hexane and the like. The preferred peroxide crosslinking agents are dicumyl peroxide and bis-(t-butyl peroxy) diisopropyl benzene.

Specific amounts of peroxide crosslinking agents which may be employed are dependent upon the particular tread rubber selected, the amount of covalent crosslinks desired, curing conditions and the like. In general, the amounts of peroxide crosslinking agent utilized may range from about 0.1 to about 10 parts by weight per 100 parts by weight of tread rubber with preferred amounts ranging from 0.3 to 5 parts by weight.

Sulfur crosslinking agents which may be employed to introduce covalent crosslinks into the tread

5

rubber include sulfur and sulfur donor compounds. Mixtures of sulfur and sulfur donor compounds may also be utilized and such mixtures are often preferred. Virtually any of the sulfur donor compounds heretofore utilized to cure tread rubbers such as natural rubber, SBR, EPDM and the like may be employed. Illustrative of but a few of the many sulfur donor compounds which may be used are thiuram polysulfides such as tetramethylthiuram disulfide, tetraethylthiuram disulfide, tetrabutylthiruam disulfide and the like and salts of dialkyldithiocarbamates such as zinc dibutyldithiocarbamate, zinc dimethyldithiocarbamate, zinc diethyldithiocarbamate and the like.

Specific amounts of sulfur crosslinking agents which may be employed are dependent upon the particular tread rubber selected, the amount of covalent crosslinks desired, curing conditions and the like. In general, the amounts of sulfur crosslinking agent utilized may range from about 0.5 to 5 parts by weight per 100 parts by weight of tread rubber with preferred amounts ranging from 1.0 to 3 parts by weight.

In addition to the tread rubber and crosslinking components, the tread rubber compositions may contain other conventional additives such as fillers, reinforcing agents (e.g. carbon black), plasticizers, processing and extender oils, antioxidants, waxes, cure accelerators and the like. The tread rubber composition may be prepared by admixing the ingredients using conventional rubber mixing equipment (e.g. internal mixer or mill) and procedures. The tread rubber compositions may be crosslinked (i.e. cured) using conventional curing conditions.

The amounts of ionic and covalent crosslinks in the crosslinked tread rubber can readily be determined by one skilled in the art of curing of rubbers or polymers using either of two general procedures. Thus, the relative level of ionic and covalent crosslinks can be determined by calculation from the quantities of the covalent crosslinking agent and the acid functionality incorporated into the polymer or rubber. Alternatively and preferably, the level of ionic and covalent crosslinks can be determined by direct measurement of crosslink density before and after treatment of the rubber in a manner known to dissociate the ionic bonds. In the preferred method which was employed herein, a sample of crosslinked tread rubber was evaluated for total crosslink density by conventional swelling methods. Then, the sample was extracted or hydrolyzed to remove the ionic crosslinks. The crosslink density was then again determined by swelling methods. The difference between the original crosslink density and the crosslink density after extraction represents the amount of ionic crosslinks while the remaining crosslink density represents the covalent crosslinks.

The tread rubber composition may then be evaluated for rolling resistance, traction, hysteresis, abrasion resistance and other desired properties either by subjecting the crosslinked composition to laboratory tests which are known to have a correlation to those properties or by preparing tires having a crosslinked tread portion formed from the compositions and then testing the tires for such properties.

In this application, certain of the crosslinked tread rubber compositions were evaluated for rolling resistance, traction, hysteresis, abrasion resistance and other properties using both laboratory tests and tire tests while other tread rubber compositions were evaluated for such properties using only laboratory tests.

The various tests and test procedures employed in evaluating the crosslinked tread rubbers were as follows:

Rolling Resistance

The rolling resistance of the tread rubber compounds was determined in laboratory tests using a rebound resilience test in which the rebound resilience of the compound is expressed as a percentage of rebound. In this test, the higher the percentage of rebound exhibited by the compound the lower the rolling resistance of the compound. The rebound resilience test employed was a steel ball rebound test in which the percentage of rebound was determined at room temperature and was conducted in accordance with the general procedure set forth at pages 320-323 of the article entitled "Hysteresis and Elastic Properties of Rubberlike Materials under Dynamic Shear Stresses" by J. H. Dillan, I. B. Prettyman and G. L. Hall, appearing in the Journal of Applied Physics, Vol. 15, pages 309-323 (1944).

The rolling resistance of tires containing the tread rubber compounds was determined by mounting and inflating the tire on a rim and allowing it to be turned by a 67 inch diameter drum under from 80 to 100 percent of its rated load at a peripheral speed of 50 mph and measuring the rolling loss. In this test, the lower the rolling loss the lower the rolling resistance.

Traction

The traction of a tread rubber compound is generally related to the coefficient of friction between the tread rubber compound and road surface. In the laboratory procedure utilized in the examples, the wet traction of the various tread rubber compounds was determined using the Stanley London skid resistance test which employs the British Portable Skid Tester. The skid resistance tester is a pendulum device having as a bob a spring loaded rubber slider. The slider is composed of a thick block of the compound to be tested bonded to a backing plate, which is fixed to the bottom of the pendulum arm. When the pendulum is released, by proper adjustments, the rubber slider will contact the test surface over a definite length during its stroke. The energy loss of the pendulum arm, which balances the friction work done by the slider, is a function of the skid resistance of the test surface (e.g. wet asphalt, wet concrete, wet etched glass, etc.) and the rubber compound used. In the examples, the test surface employed was wet glass. In this test, the higher the measured value the better the traction.

The traction of tires containing the tread rubber compounds was determined in accordance with the following procedure: The average peak and slide traction properties were measured in accordance with the method set forth in ASTM E274 using the skid trailer. Wet traction was reported for .3 coefficient concrete at 32 km/hr. Dry traction was measured on .8 coefficient asphalt at 64 km/hr. Results are reported in terms of a traction rating with the control rated as 100. In this test, the higher the traction rating the better the traction.

Abrasion Resistance

The abrasion resistance of the tread rubber compounds was determined in laboratory tests using a Pico Abrader utilizing the procedure set forth in ASTM D2228-83. In this test, the lower the measured value the better the abrasion resistance.

The abrasion resistance of tires containing the tread rubber compounds was determined in accordance with the following procedure: The tires were applied to an automobile and subjected to a 40,000 mile wear test. The tires were rotated to all positions on the auto during the test to insure uniform wear. Tread wear was determined by measuring skid loss. Wear results are reported in terms of a mean wear rating with tires containing control tread rubber compounds assigned a rating of 100. In this test, the higher the wear rating the better the abrasion resistance.

Hysteresis

The hysteresis properties of the tread rubber compounds were determined by obtaining tan delta (Tan $\delta$) values. Tan $\delta$ is the ratio of the loss modulus to the storage modulus. The Tan $\delta$ values were determined using an MTS machine at 7% strain, 10 lbs. preload and a frequency of 10 Hertz. In this test, the lower the tan $\delta$ value the lower the hysteresis.

The following examples are submitted for the purpose of further illustrating the nature of the present invention and should not be regarded as a limitation on the scope thereof. Parts and percentages shown in the examples are by weight unless otherwise indicated.

Examples 1-2

In these examples, crosslinked tread rubbers of the invention containing ionic and covalent crosslinks were prepared by crosslinking tread rubber compounds containing a blend of unsaturated rubbers, a metal dimethacrylate and a peroxide crosslinking agent. For comparative purposes, a conventional crosslinked tread rubber containing covalent crosslinks prepared by crosslinking a tread rubber compound containing a blend of unsaturated rubbers and a sulfur based crosslinking system was included to serve as a control.

The tread rubber compounds prior to crosslinking had the following formulations:

| | parts by weight | | |
|---|---|---|---|
| Example No. | Control | 1 | 2 |
| Ingredients | | | |
| SBR[a] | 89.38 | 89.38 | 89.38 |
| Natural Rubber | 35.00 | 35.00 | 35.00 |
| HS-HAF black[b] | 63.00 | 45.00 | 63.00 |
| Zinc dimethacrylate | -- | 15.00 | 10.00 |
| Zinc oxide | 1.60 | 8.60 | 4.60 |
| Stearic acid | 4.00 | 4.00 | 4.00 |
| Wax | 3.00 | 3.00 | 3.00 |
| Aromatic oil | 6.25 | 6.25 | 6.25 |
| Polygard[c] | -- | 1.00 | 1.00 |
| Santoflex 13[d] | 0.75 | -- | -- |
| Santocure NS[e] | 1.00 | -- | -- |
| Sulfur | 3.83 | -- | -- |
| Vulcup R [f] | -- | 1.20 | 1.00 |
| Altax [g] | -- | 1.25 | 1.00 |
| Total | 207.81 | 209.68 | 218.23 |

(a) an oil extended SBR copolymer containing 37.5 parts by weight of napthenic oil, the base copolymer containing 18% styrene and having an ML4 at 100°C of 100 and a Tg of -60°C.
(b) high structure HAF
(c) a tri-(nonylated phenol) phosphite antioxidant available from Uniroyal Chemical Company
(d) paraphenylene diamine antioxidant
(e) N-tertiary butyl benzothiazole-2-sulfenamide
(f) bis-(t-butyl peroxy) diisopropyl benzene
(g) benzothiazyl disulfide

The above tread rubber compounds were prepared by admixing the ingredients in a Banbury mixer using conventional rubber mixing procedures. The tread rubber compounds were then crosslinked (i.e. cured) using varying curing conditions depending on the type tests desired. The crosslinked tread rubber compounds were then evaluated for various properties in the laboratory including amounts of covalent and ionic crosslinks (Example 1), stress-strain properties, rebound resilience, hysteresis (Tan δ) and other properties. Test conditions and results are shown in Table I.

Table I

| Example No. | Control | 1 | 2 |
|---|---|---|---|
| Crosslinks, % | | | |
| ionic | 0 | 28 | N.D. |
| covalent | 100 | 72 | N.D. |
| Stress-Strain @ R.T.* | | | |
| (cure: 30 min at 300°F) | | | |
| 100% modulus, MPa** | 2.3 | 3.0 | 2.9 |
| Tensile strength, MPa | 15.8 | 19.8 | 18.2 |
| Elongation at Break, % | 398 | 482 | 428 |
| Ring Tear at 171°C | 128 | 178 | 219 |
| (Cure: 30' @ 340°F) | | | |
| MTS Tan δ | | | |
| (Cure: 30' @ 340°F) | | | |
| R.T. | 0.204 | 0.135 | 0.187 |
| 100°C | 0.159 | 0.120 | 0.175 |
| Stanley London Wet Traction | 39 | 37 | 38 |
| Steel Ball Rebound @ R.T., % | 43 | 55 | 47 |
| (Cure: 30' @ 340°F) | | | |

*Room temperature
**megapascals
N.D. = Not determined but contains both ionic and covalent crosslinks.

As indicated by the above laboratory data, the crosslinked tread rubbers of the invention exhibit increased strength, higher tear resistance, lower hysteresis, lower rolling resistance and almost equivalent wet traction as compared to the control.

The above tread rubber compounds were then evaluated in tires by preparing P195/75R14 steel belted radial tires using the tread rubber compounds as the tire treads. The tires were produced using conventional tire building and curing procedures and conditions. The tires were evaluated for rolling resistance, abrasion resistance and traction using the general test procedures described above. Test results are shown in Table II.

Table II

| Tire Tread of Ex. No. | Control | 1 | 2 |
|---|---|---|---|
| Rolling Loss | 15.6 ± 0.3 | 14.5 ± 0.3 | 15.5 ± 0.2 |
| Abrasion resistance-mean wear rating | 100 | 128 | 111 |
| Dry Traction (asphalt) | | | |
| 20 MPH | 100/100* | 92.8/95.7 | N.D** |
| 40 MPH | | 98.8/105.9 | " |
| 60 MPH | | 94.4/101.3 | " |
| Wet Traction (asphalt) | | | |
| 20 MPH | | 92.8/95.7 | N.D |
| 60 MPH | | 94.4/101.3 | " |
| Wet Traction (concrete) | | | |
| 20 MPH | | 94.4/87.3 | N.D |
| 60 MPH | | 85.7/87.8 | " |

\* duplicate tests - controls rated as 100
\*\*not determined

## Example 3

In this example, a crosslinked tread rubber of the invention containing ionic and covalent crosslinks was prepared by crosslinking a tread rubber compound containing a blend of unsaturated rubbers, a metal dimethacrylate and a peroxide crosslinking agent. For comparative purposes, a conventional crosslinked tread rubber containing covalent crosslinks was prepared by crosslinking a tread rubber compound containing a blend of unsaturated rubbers and a sulfur based crosslinking system was included to serve as a control (designated $C_1$ for convenience).

The tread rubber compounds prior to crosslinking had the following formulations:

|  | parts by weight | |
|---|---|---|
| Example No. | C$_1$ | 3 |
| SBR[a] | 68.75 | 68.75 |
| SBR[b] | 60.50 | 60.50 |
| HS-HAF Black | 63.00 | 45.00 |
| Zinc Oxide | 3.00 | 10.00 |
| Zinc Dimethacrylate | - | 15.00 |
| Stearic Acid | 2.00 | 2.00 |
| Wax | 2.00 | 2.00 |
| Aromatic Oil | 2.00 | 2.00 |
| Polygard | - | 1.00 |
| Santoflex 13 | 0.95 | |
| Vulcup 4oke[c] | - | 2.50 |
| Altax | - | 1.50 |
| Sulfur | 2.35 | - |
| Santocure NS | 0.60 | - |
| Morpholine Disulfide | 0.60 | - |
| Total | 205.75 | 210.25 |

(a) Oil extended SBR containing 21 phr oil, base polymer contains 33% styrene, MS4 at 100° C of 36-46.
(b) Oil extended SBR containing 37.5 phr oil, base polymer contains 18.5% styrene.
(c) bis-(t-butylperoxy) diisopropyl benzene (39.5-41.5%) on Burgess KE clay.

The above tread rubber compounds were prepared, cured and tested substantially in accordance with the procedure utilized in Examples 1 and 2. Test conditions and results are shown in Table III.

Table III

| Example No. | $C_1$ | 3 |
|---|---|---|
| Crosslinks, % | | |
| Ionic | 0 | 22 |
| Covalent | 100 | 78 |
| Stress-Strain at R.T. | | |
| (Cure 30' at 300°F) | | |
| 100% modulus, Mpa | 2.0 | 3.0 |
| Tensile Strength, Mpa | 17.3 | 18.0 |
| Elongation at Break, % | 450 | 390 |
| Ring Tear at 171°C | | |
| (Cure 30' at 340°F) | 130 | 75 |
| MTS Tan $\delta$ | | |
| (Cure 30' at 340°F) | | |
| R.T. | 0.204 | 0.110 |
| 100°C) | ND | ND |
| Stanley London Wet Traction | 40 | 37 |
| Steel Ball Rebound | 47 | 62 |
| R.T. | | |
| (Cure 30' at 340°F) | | |
| Pico Abrasion | | |
| (Cure 25' at 320°F) | | |
| Volume Loss | .06 | .05 |

As indicated by the above laboratory data, the crosslinked tread rubber of the invention (Example 3) exhibits increased strength, lower hysteresis (Tan $\delta$ ), comparable wet traction and equivalent wear (Pico Abrasion) as compared to the control ($C_1$).

The above tread rubber compounds were then evaluated in tires for rolling loss and traction as in Examples 1 and 2. Test results are shown in Table IV.

Table IV

| Tire Tread of Ex. | $C_1$ | 3 |
|---|---|---|
| Rolling Loss | 9.4 | 8.9 |
| Dry Traction (Asphalt) | | |
| 20 mph | | |
| 40 mph | 100 | 96.5 |
| 60 mph | | |
| Wet Traction (Concrete) | | |
| 20 mph | 100 | 95 |
| 60 mph | 100 | 96.5 |

Example 4

In this example, a crosslinked tread rubber of the invention was prepared by crosslinking a zinc sulfonated EPDM compound with a peroxide curing agent.

For comparative purposes, crosslinked EPDM tread rubbers containing only covalent crosslinks were prepared by crosslinking an EPDM compound with varying amounts of peroxide (shown as example $C_2$ for convenience) and a crosslinked EPDM tread rubber containing only ionic crosslinks (designated example $C_3$ for convenience) were included to serve as controls.

The tread rubber compounds had the following formulations:

| | parts by weight | | |
|---|---|---|---|
| Example No. | $C_2$* | $C_3$ | 4 |
| Ingredients | | | |
| EPSYN 55[a] | 100.00 | -- | -- |
| IE2590[b] | -- | 100.00 | 100.00 |
| Carbon black | 50.00 | 50.00 | 50.00 |
| Oil | 50.00 | 50.00 | 50.00 |
| Zinc stearate | 40.00 | 40.00 | 40.00 |
| Vulcup R | 6.5 - 8.5 | -- | 2.00 |
| Total | 246.5 - 248.5 | 240.00 | 242.00 |

*represents four compounds containing 6.5, 7.0, 7.5 and 8.5 parts peroxide respectively.

(a) an ethylene/propylene/ethylidene norbornene terpolymer containing 2.5% unsaturation and having a viscosity, ML/4/125° C, of about 55, available from Copolymer Rubber and Chemical Corporation.

(b) a zinc sulfonated EPDM having a base EPDM molecular weight of 50,000, an average number of $SO_3$ groups per molecule of 13, 2.7% by weight ionic groups, a bulk density of 8-10 lbs. per cubic feet, a Tg of -60° C and 2 meq of zinc sulfonate groups per 100 grams of terpolymer, available from Uniroyal Chemical Company.

The above compounds were mixed in accordance with the procedure set forth in Examples 1-2. The tread rubber compounds were cured using varying curing conditions depending on the nature of the tests to be run. The crosslinked tread rubber compounds were tested for hysteresis (Tan $\delta$) and Pico Abrasion. Test conditions and results are shown in Table III.

Table V

| Example No. | $C_2$ | $C_3$ | 4 |
|---|---|---|---|
| Crosslink Type | Covalent | Ionic | Ionic & Covalent* |
| MTS Tan $\delta$ | | | |
| (Cure: 30' @ 340° F) R.T. | 0.202 - 0.314 | 0.127 - 0.129 | 0.079 |
| Pico Abrasion | | | |
| (Cure: 25' @ 320° F) Volume Loss | 0.05 - 0.07 | 0.02 - .06 | .01 |

* Percentages not specifically determined.

The above data clearly indicates that the crosslinked tread rubber of the invention (Example 4) which contains both ionic and covalent crosslinks has lower hysteresis as measured by Tan $\delta$ and improved wear resistance as measured by Pico Abrasion compared to the control $C_2$ which contains only covalent crosslinks and the control $C_3$ which contains only ionic crosslinks.

13

## Example 5

In this example, the effect of introducing ionic and covalent crosslinks into an EPDM rubber on modulus, hysteresis and wear was further determined by crosslinking a zinc sulfonate EPDM rubber with a peroxide curing agent. For comparative purposes, a crosslinked EPDM rubber containing only covalent crosslinks (designated Example $C_4$ for convenience) and an EPDM rubber containing only ionic crosslinks (designated Example $C_5$ for convenience) were included to serve as controls.

The rubber compounds had the following formulations:

|  | parts by weight | | |
|---|---|---|---|
| Example No. | $C_4$ | $C_5$ | 5 |
| EPSYN 55 | 100.00 | -- | -- |
| IE2590 | -- | 100.00 | 100.00 |
| Zinc stearate | 40.00 | 40.00 | 40.00 |
| Vulcup R | 4.00 | -- | 4.00 |
| Total | 144.00 | 140.00 | 144.00 |

The above rubber compounds were mixed and tested in accordance with the procedure of Examples 1-2. Test results are shown in Table VI.

Table VI

| Example No. | $C_4$ | $C_5$ | 5 |
|---|---|---|---|
| Crosslink Type | Covalent | Ionic | Covalent & Ionic |
| Stress-Strain at R.T. | | | |
| (Cure: 30' @ 300°F) 100% Modulus, MPa | 2.0 | 3.8 | 4.5 |
| MTS Tan $\delta$ | | | |
| (Cure: 30' @ 340°F) R.T. | 0.106 | 0.075 | 0.079 |
| Pico Abrasion | | | |
| (Cure: 25' @ 320°F) Volume Loss | 0.14 | 0.01 | 0.01 |

As indicated by the above data, higher modulus or strength can be obtained using the tread rubbers of the invention which contain both ionic and covalent crosslinks (Example 5) while still realizing the better wear resistance and lower hysteresis benefits of tread rubbers containing only ionic crosslinks (Example $C_5$).

## Examples 6-7

These examples further illustrate the nature of the invention utilizing a carboxylated nitrile rubber. In these examples, the effect of introducing ionic and covalent crosslinks into the carboxylated nitrile rubber on abrasion resistance and hysteresis was determined by means of a screening evaluation which involved curing the carboxylated nitrile rubber with an ionic crosslinking agent and a covalent crosslinking agent in the absence of fillers, plasticizers and other additives coventionally employed in tread rubber compounds.

For comparative purposes, crosslinked carboxylated nitrile rubbers containing only covalent crosslinks (designated examples $C_6$ and $C_7$ for convenience) were prepared and included to serve as controls.

The carboxylated nitrile rubber compounds prior to curing had the following formulations:

| | parts by weight | | | |
|---|---|---|---|---|
| Example No. | $C_6$ | $C_7$ | 6 | 7 |
| Ingredients | . | | | |
| Krynac 110C* | 100.00 | 100.00 | 100.00 | 100.00 |
| Zinc oxide | -- | -- | 5.00 | 5.00 |
| Vulcup R | 0.50 | 1.00 | 0.50 | 1.00 |
| | 100.50 | 101.00 | 105.50 | 106.00 |

*a non-staining hot polymerized carboxylated nitrile rubber of medium nitrile content having a mooney viscosity, ML/4/100°C, of 110 and a specific gravity of 0.98 available from Polysar Corporation.

The above compounds were mixed as in Examples 1-2. The compounds were then cured and tested for hysteresis (Tan $\delta$) and Pico Abrasion. Test conditions and results are shown in Table VII.

Table VII

| Example No. | $C_6$ | $C_7$ | 6 | 7 |
|---|---|---|---|---|
| Crosslink Type | Covalent | Covalent | Covalent & Ionic | Covalent & Ionic |
| MTS Tan $\delta$ | | | | |
| (Cure: 30' @ 340°F) R.T. | 0.090 | 0.080 | 0.079 | 0.073 |
| Pico Abrasion | | | | |
| (Cure: 25' @ 320°F) Volume Loss | 0.19 | 0.27 | 0.08 | 0.18 |

The above data clearly indicates that nitrile rubbers containing both ionic and covalent crosslinks exhibit better properties than nitrile rubber containing only covalent crosslinks. Thus, for example, a comparison of control Example $C_6$ and Example 7 shows that at equivalent wear (Pico Abrasion = 0.19 and 0.18 respectively), Example 7 has lower hysteresis than the control (Tan $\delta$ = 0.073 vs 0.090).

In addition, a comparison of control Example $C_7$ with Example 6 shows that the equivalent hysteresis (Tan $\delta$ = 0.080 and 0.079 respectively), Example 6 has significantly improved wear resistance (Pico Abrasion = 0.08 vs 0.27).

**Claims**

1. A tire tread comprising a crosslinked tread rubber containing from 20 to 50 percent of ionic crosslinks and from 80 to 50 percent of covalent crosslinks.

2. The tire tread of claim 1 wherein said crosslinked tread rubber contains from 20 to 40 percent of ionic crosslinks and from 80 to 60 percent of covalent crosslinks.

3. The tire tread of claim 1 wherein said crosslinked tread rubber is formed by curing a tread rubber composition comprising a tread rubber selected from the group consisting of natural rubber, polybutadiene, SBR, EPDM, nitrile rubber and blends thereof; a metal dimethacrylate selected from the group consisting of magnesium dimethacrylate and zinc dimethacrylate and a covalent crosslinking agent selected from the group consisting of peroxide and sulfur crosslinking agents.

4. The tire tread of claim 3 wherein said tread rubber composition comprises 100 parts by weight of said tread rubber; from about 5 to about 40 parts by weight of said metal dimethacrylate and from about 0.1 to about 10 parts by weight of said peroxide crosslinking agent or from about 0.5 to 5.0 parts by weight of said sulfur crosslinking agent.

5. The tire tread of claim 3 wherein said tread rubber is SBR, said metal dimethacrylate is zinc dimethacrylate and said peroxide is bis-(t-butyl peroxy) diisopropyl benzene.

6. The tire tread of claim 3 wherein said tread rubber composition further comprises rubber additives selected from the group consisting of fillers, reinforcing agents, plasticizers, processing and extender oils, antioxidants, waxes and cure accelerators.

7. The tire tread of claim 1 wherein said crosslinked tread rubber is formed by curing a tread rubber composition comprising an acid group containing tread rubber selected from the group consisting of carboxylated and sulfonated rubbers; an inorganic metal salt neutralizing agent and a covalent crosslinking agent selected from the group consisting of peroxide and sulfur crosslinking agents.

8. The tire tread of claim 7 wherein said tread rubber composition comprises 100 parts by weight of said acid group-containing tread rubber; from about 1 to about 20 parts by weight of said inorganic metal salt and from about 0.1 to about 10 parts by weight of said peroxide crosslinking agent or from about 0.5 to 5.0 parts by weight of said sulfur crosslinking agent.

9. The tire tread of claim 7 wherein said carboxylated rubber is selected from the group consisting of carboxylated SBR and carboxylated nitrile rubber.

10. The tire tread of claim 7 wherein said sulfonated rubber is selected from the group consisting of sulfonated SBR and sulfonated EPDM rubber.

11. The tire tread of claim 7 wherein said inorganic metal salt is a metal oxide.

12. The tire tread of claim 11 wherein said metal oxide is selected from the group consisting of magnesium oxide, zinc oxide and mixtures thereof.

13. The tire tread of claim 7 wherein said peroxide crosslinking agent is bis-(t-butyl peroxy) diisopropyl benzene.

14. The tire tread of claim 7 wherein said acid group-containing tread rubber is a carboxylated nitrile rubber, said inorganic metal salt is zinc oxide and said peroxide crosslinking agent is bis-(t-butyl peroxy) diisopropyl benzene.

15. The tire tread of claim 5 wherein said tread rubber compound further comprises rubber additives selected from the group consisting of fillers, reinforcing agents, plasticizers, processing and extender oils, antioxidants, waxes and cure accelerators.

16. The tire tread of claim 1 wherein said crosslinked tread rubber is formed by curing a tread rubber composition comprising a neutralized acid group-containing tread rubber selected from the group consisting of neutralized carboxylated and neutralized sulfonated rubbers and a covalent crosslinking agent selected from the group consisting of peroxide and sulfur crosslinking agents.

17. The tire tread of claim 16 wherein said tread rubber composition comprises 100 parts by weight of said neutralized acid group-containing tread rubber and from about 0.1 to about 10 parts by weight of said peroxide crosslinking agent or 0.5 to about 5.0 parts by weight of said sulfur crosslinking agent.

18. The tire tread of claim 16 wherein said neutralized carboxylated rubber is selected from the group consisting of neutralized carboxylated SBR and neutralized carboxylated nitrile rubber.

19. The tire tread of claim 16 wherein said neutralized sulfonated rubber is selected from the group consisting of neutralized sulfonated SBR and neutralized sulfonated EPDM.

20. The tire tread of claim 19 wherein said neutralized sulfonated EPDM is a zinc sulfonated EPDM.

21. The tire tread of claim 16 wherein said peroxide crosslinking agent is bis-(t-butyl peroxy) diisopropyl benzene.

22. The tire tread of claim 16 wherein said tread rubber composition further comprises rubber additives selected from the group consisting of fillers, reinforcing agents, plasticizers, processing and extender oils, antioxidants, waxes and cure accelerators.

European Patent Office

# EUROPEAN SEARCH REPORT

Application Number

EP 90 10 5674

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DATABASE WPI, no. 78-62696A, Derwent Publications Ltd, London, GB; & JP-A-53 085 842 (BRIDGESTONE TIRE K.K.) 28-07-1978 * Abstract * | 1-22 | B 60 C    1/00 C 08 L   21/00 C 08 L   13/00 C 08 K    5/09 |
| X | US-A-4 191 671  (BRIDGESTONE) * Claim 1; column 2, line 23 * | 1-22 | |
| A | US-A-4 495 326  (FIRESTONE) * Claim 1; column 2, line 16 * | 1-6 | |
| A | EP-A-0 248 271  (FIRESTONE) * Claim 1; front page, last line * | 1-6 | |

TECHNICAL FIELDS SEARCHED (Int. Cl.5)

B 60 C
C 08 L
C 08 K

The present search report has been drawn up for all claims

| Place of search | Date of completion of the search | Examiner |
|---|---|---|
| THE HAGUE | 25-07-1990 | VAN HUMBEECK F.W.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)